# EUROPEAN PATENT APPLICATION

(11) **EP 4 487 986 A1**
(43) Date of publication of application: **08.01.2025**
(21) Application number: 23763133.8
(22) Date of filing: 17.01.2023
(51) Int. Cl.: B23K 20/12

(54) **LINEAR FRICTION WELDING METHOD, LINEAR FRICTION WELD JOINT, AND WELDED STRUCTURE**

(30) Priority: 04.03.2022 JP 2022033477
(71) Applicant: OSAKA UNIVERSITY, Suita-shi Osaka 565-0871 (JP)
(72) Inventor: FUJII, Hidetoshi, Suita-shi, Osaka 565-0871 (JP); USHIODA, Kohsaku, Suita-shi, Osaka 565-0871 (JP); MORISADA, Yoshiaki, Suita-shi, Osaka 565-0871 (JP)
(74) Representative: Mewburn Ellis LLP
(86) International application number: PCT/JP2023/001203
(87) International publication number: WO 2023/166871

(57) **Abstract**

The present invention provides a simple and efficient linear friction welding method capable of forming a satisfactory weld portion regardless of the materials, shapes and sizes of members to be welded, and a linear friction welded structure obtained by the linear friction welding method, and also provides a simple and efficient linear friction welding method capable of accurately controlling a welding temperature regardless of the materials, shapes and sizes of members to be welded, and a linear friction welded structure obtained by the linear friction welding method. A linear friction welding method of the present invention is characterized by comprising: a first step for abutting one member against another member to form an interface to be welded; a second step for applying a preliminary pressure substantially perpendicularly to the interface to be welded; a third step for repeatedly sliding the one member and the other member on the same trajectory in a state in which a welding pressure is being applied to the interface to be welded, and removing burrs from the interface to be welded; and a fourth step for stopping the sliding, and forming a welded surface. The preliminary pressure in the second step has a value higher than the welding pressure.

## Description

### TECHNICAL FIELD

The present invention relates to a method for linear friction welding of metallic materials, a linear friction joint obtained by said linear friction welding method, and a welded structure having said linear friction joint.

### BACKGROUND ART

With the increase in strength of metal materials such as steel and aluminum alloys, the decrease in strength at the welded portion that determine the mechanical properties of the welded structure has become a serious problem. On the other hand, in recent years, attention has been paid to a solid phase welding method in which the maximum temperature reached during welding does not reach the melting point of the material to be welded and the decrease in strength at the welded portion is smaller than that of conventional melt welding, and it is rapidly progressing to put into practical use.

In particular, the linear friction welding (LFW: Linear Friction Welding), in which metal members are slid together in a linear trajectory, does not require the use of a tool, unlike the friction stir welding (FSW: Friction Stir Welding), can be easily applied to metals having a high melting temperature, and is expected to be put to practical use in various industries.

However, since the materials, shapes, and sizes of the materials to be welded that are the target of the linear friction welding are various, the appropriate welding conditions and welding mechanisms for each combination of materials to be welded have not been clarified, and the actual situation is that optimization is performed based on a large number of preliminary tests and experiences, and the like.

On the other hand, for example, Patent Literature 1 (Japanese Patent Unexamined publication No. 2015-164738) discloses a friction welding apparatus for friction welding one member to the other member wherein, in a state that the one member is brought into contact with the other member, the both members are repeatedly moved relative to each other on the same trajectory, which is characterized by providing a stopping means which, according to a command to stop the relative movement of the one member having respect to the other member, stops the relative movement of the one member to the other member during a period of time from the generation of the stopping command to one relative movement of the one member having respect to the other member on the trajectory.

In the friction welding apparatus described in Patent Literature 1, it is said that when the one member is brought into contact with the other member and is friction-welded by repeatedly moving them relative to each other on the same trajectory, it is possible to easily specify the timing of the generation of the stopping command of the relative movement at which timing the relative movement of the two members will just stop at the timing when the two members will be in an appropriate welded state.

Further, in Patent Literature 2 (Japanese Unexamined Patent Publication No. 2018-122344), the present inventors have disclosed a linear friction welding method, comprising: a first step of forming the interface to be welded by bringing one member into contact with the other member, a second step of repeatedly sliding the one member and the other member on the same locus while applying a pressure substantially perpendicular to the interface to be welded, and discharging flash from the interface to be welded, a third step of forming a welding surface by stopping the sliding, wherein; setting the pressure to be greater than or equal to the yield stress and less than or equal to the tensile strength of the one member and/or the other member at the desired welding temperature.

In the linear friction welding method described in Patent Literature 2, when the welding pressure is set to be equal to or higher than the yield stress and equal to or lower than the tensile strength of the materials to be welded at the desired welding temperature, it is possible to provide a linear friction welding method where the welding temperature can be accurately controlled and the welding temperature can be lowered.

### PRIOR ART REFERENCE

### Patent Reference

Patent Literature 1: Japanese Patent Unexamined Publication No. 2015-164738
Patent Literature 2: Japanese Patent Unexamined Publication No. 2018-122344

### SUMMARY OF THE INVENTION

### Problem to be solved by the invention

It is extremely complicated and difficult to find the welding conditions for forming good welded portions for all of the members to be welded by linear friction welding. In contrast, the friction welding method disclosed in the above Patent Literature 1 shortens the period from the generation of the stopping command to stopping of the actuator, and controls the amount of friction welding. Although it contributes to the sophistication of basic welding process control of the linear friction welding, it does not show a suitable welding method for linear friction welding of materials to be joined having different materials, sizes and shapes.

Further, in particular, when the welding temperature is to be controlled accurately, it may be more difficult to optimize the welding conditions than when materials to be welded are simply welded together. By using the linear friction welding method described in Patent Literature 2, the welding temperature can be controlled, but, for example, when attempting to lower the temperature, it is necessary to apply a higher welding pressure. Here, when the interface to be welded is large, and the like, it is difficult to make the behavior of the entire interface to be welded uniform (stabilizing) during welding, which can lead to problems such as the formation of cracks or unwelded parts, and the occurrence of location-dependent temperature history.

In view of the problems in the prior arts as described above, an object of the present invention is to provide a simple and efficient linear friction welding method capable of forming a satisfactory weld portion regardless of the materials, shapes and sizes of members to be welded, and a linear friction welded structure obtained by the linear friction welding method. Further another object of the present invention is to provide a simple and efficient linear friction welding method capable of accurately controlling a welding temperature regardless of the materials, shapes and sizes of members to be welded, and a linear friction welded structure obtained by the linear friction welding method.

### MEANS TO SOLVE THE PROBLEMS

In order to achieve the above object, the present inventors have done intensive study as to linear friction welding methods, and have found the fact that, as a preliminary step to applying the welding pressure, applying a pressure higher than the welding pressure to the materials to be welded is extremely effective, and reached the present invention.

Namely, the present invention provides a linear friction welding method characterized by comprising:
a first step for abutting one member against the other member to form an interface to be welded;
a second step for applying a preliminary pressure substantially perpendicularly to the interface to be welded;
a third step for repeatedly sliding the one member and the other member on the same trajectory in a state in which a welding pressure is being applied to the interface to be welded, and removing burrs from the interface to be welded; and
a fourth step for stopping the sliding, and forming a welded surface,
wherein the preliminary pressure in the second step is set to a value higher than the welding pressure.

In the linear friction welding method of the present invention, the most characterizing feature is to provide the second step in which the preliminary pressure is applied substantially perpendicularly to the interface to be welded, and to set the preliminary pressure in the second step to a value higher than the welding pressure. The non-uniformity and instability of the linear friction behavior are largely caused by the initial state of the welding, and this state is promoted with the passage of welding time. Regarding to this fact, by applying the preliminary pressure higher than the welding pressure, the linear friction behavior at the initial stage of the welding can be made uniform and stabilized, thereby it is possible to realize the suppressing unwelded defects and the achieving a uniform welding temperature distribution. Further, by applying the preliminary pressure higher than the welding pressure, it is possible to suppress cracks and the like caused by a high welding pressure.

Further, in the linear friction welding method of the present invention, it is preferable that the interface to be welded is work-hardened in the second step. The effect of the present invention can be obtained by applying the preliminary pressure higher than the welding pressure, but by work-hardening the interface to be welded, the linear friction behavior at the initial stage of the welding can be made uniform and stabilized, thereby it is possible to realize more reliably the suppressing unwelded defects and the achieving a uniform welding temperature distribution.

Further, in the linear friction welding method of the present invention, it is preferable that the thickness of the interface to be welded is 3 mm or more. In the linear friction welding method of the present invention, since the linear friction behavior at the initial stage of welding can be made uniform and stabilized, and unwelded defects can be suppressed and the welding temperature distribution can be made uniform, even when the thickness of the interface to be welded is 3 mm or more, a good and homogenous weld portion can be obtained.

Further, in the linear friction welding method of the present invention, it is preferable that the one member and/or the other member is made of a steel material. Since the microstructure and mechanical properties of the steel material are sensitive to temperature history, and the linear friction welding of the present invention can make the distribution of the welding temperature across the entire welded interface uniform, it possible to obtain a good and homogeneous welded portion.

Further, in the linear friction welding method of the present invention, it is preferable that a desired welding temperature is determined, and the pressure is set to be equal to or higher than the yield stress and equal to or lower than the tensile strength of the one member or the other member at the desired welding temperature. When setting the welding pressure of the linear friction welding to be equal to or higher than the yield stress and equal to or lower than the tensile strength of the one member or the other member at the desired welding temperature, the welding temperature can be accurately controlled. A compressive stress is mainly applied in the vicinity of the interface to be welded, and deformation begins when a welding pressure equal to or greater than the compressive strength of the one member or the other member at the welding temperature is applied, but, in practice, the welding temperature can be accurately controlled by setting the welding pressure to be equal to or higher than the yield stress and equal to or lower than the tensile strength of the one member or the other member at the desired welding temperature.

Furthermore, in the linear friction welding method of the present invention, it is preferable that the one member and/or the other member is made of a steel material, and the welding temperature is set to be equal to or lower than an A₁ point of the steel material. By setting the welding temperature to equal to or lower than the A₁ point of the steel material, it is possible to suppress the formation of brittle transformed phases in the welded portion, and it is possible to obtain a welded portion having high reliability.

The present invention also provides a linear friction welded joint, characterized by having a linear friction welded portion where one member and the other member are integrated via a linear friction welded interface, wherein
the one member and/or the other member is made of steel material,
the thickness of the steel material forming the linear friction welded interface is 3 mm or more,
the entire linear friction welded interface is metallurgically welded, and
no martensite is formed in the steel material throughout the linear friction welded interface.

In the linear friction welded joint of the present invention, the entire linear friction welded interface having a thickness of 3 mm or more is free of defect and is in the state where martensite is not formed, and thus a welded portion having extremely high reliability and mechanical properties is formed.

In the linear friction joint of the present invention, the steel material is preferably a weathering steel. The weathering steel contains a relatively large amount of P and the like, and since it is difficult to suppress weld cracks, the application of solid-state welding is highly desired, and according to the linear friction welding method of the present invention, it is possible to obtain a good welded portion.

Furthermore, the present invention also provides a welded structure having the linear friction welded joint of the present invention. The welded portion of the welded structure of the present invention is, over the entire linear friction welded interface, free of defect and is in the state where martensite is not formed, and thus a welded structure has high reliability. In particular, a welded structure formed by linear friction welding of the weathering steel has excellent corrosion resistance and mechanical properties, and can therefore be suitably used in applications requiring reliability in corrosive environments.

### EFFECTS OF THE INVENTION

According to the present invention, it is possible to provide a simple and efficient linear friction welding method capable of forming a satisfactory weld portion regardless of the materials, shapes and sizes of members to be welded, and a linear friction welded structure obtained by the linear friction welding method. Further according to the present invention, it is also possible to provide a simple and efficient linear friction welding method capable of accurately controlling a welding temperature regardless of the materials, shapes and sizes of members to be welded, and a linear friction welded structure obtained by the linear friction welding method.

### BRIEF DESCRIPTION OF THE DRAWINGS

FIG. 1 is a schematic diagram showing a linear friction welding state.
FIG. 2 is a schematic diagram showing one embodiment of the linear friction welding method of the present invention.
FIG. 3 is a graph showing the tensile strength of various stainless steel materials at each temperature.
FIG. 4 is a schematic cross-sectional view showing one example of the linear friction welded joint of the present invention.
FIG. 5 is a cross-sectional macrophotograph of the joint obtained in Example 1.
FIG. 6 is the microstructure at the center portion of the welded interface (center portion in the vibration direction) in FIG. 5.
FIG. 7 is the microstructure of the center portion of the welded interface (center portion in the vibration direction) obtained in Example 2.
FIG. 8 is a cross-sectional macrophotograph of the linear friction welded joint obtained in Comparative Example 1.
FIG. 9 is a cross-sectional macrophotograph of each linear friction welded joint obtained in Comparative Example 2.
FIG. 10 shows a surface temperature history of the interface to be welded during the welding in Comparative Example 2.

In the following, by referring the drawings, as the typical embodiments of the linear friction welding method, the leaner friction welded joint and the linear friction welded structure of the present invention is explained in detail, but the present invention is not limited thereto. In the following explanation, the same symbol is given to the same or corresponding parts, and there is a case where overlapping explanation is omitted. In addition, since these drawings are presented to explain the concept of the present invention, there are cases where size and ratio of the structural elements are different from the real case.

### (1) Linear friction welding method

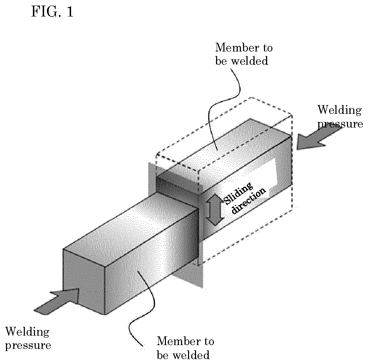

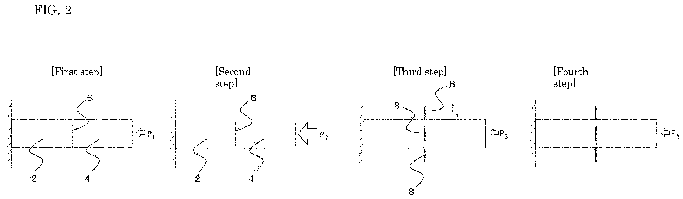

FIG. 1 is a schematic diagram showing the linear friction welding state, and FIG. 2 is a schematic diagram showing the welding steps of the linear friction welding method of the present invention. The linear friction welding method of the present invention includes a first step for abutting one member 2 against the other member 4 to form an interface 6 to be welded; a second step for applying a preliminary pressure P₂ substantially perpendicularly to the interface 6 to be welded; a third step for repeatedly sliding the one member 2 and the other member 4 on the same trajectory in a state in which a welding pressure P₃ is being applied substantially perpendicularly to the interface 6 to be welded, and removing burrs 8 from the interface 6 to be welded approximately parallel to and approximately perpendicular to the sliding direction; and a fourth step for stopping the sliding, and forming a welded surface. Each step will be described in detail below.

### (1-1) First step

The first step is a step of bringing the one member 2 into contact with the other member 4 to form an interface 6 to be welded. The one member 2 and/or the other member 4 is moved to a position where the formation of the welded portion is desired, and the surfaces to be welded are abutted to each other to form the interface 6 to be welded. The value of the pressure P₁ applied to the interface 6 to be welded in the first step is not particularly limited as long as the effects of the present invention are not impaired, and it is sufficient to apply a pressure sufficient to cause at least the one member 2 and the other member 4 to abut and form the interface 6 to be welded.

The materials of the one member 2 and the other member 4 are not particularly limited as long as the effects of the present invention are not impaired, and may be any of various conventionally known materials to be welded. It is preferable that the material to be welded is a metallic material, but the one member 2 or the other member 4 may be a ceramic material or a resin material.

Here, as the metal material, it is preferable to use a steel material, and it is more preferable to use a weathering steel. Since the microstructure and mechanical properties of the steel material are sensitive to temperature history, and the linear friction welding of the present invention can make the distribution of the welding temperature across the entire welded interface uniform, it possible to obtain a good and homogeneous welded portion. Further, by using the weathering steel, it is possible to obtain a linear friction welded joint (welded structure) that combines excellent corrosion resistance and mechanical properties and can be suitably used in applications that require reliability in corrosive environments.

Further, the size and shape of the one member 2 and the other member 4 are not particularly limited as long as the effects of the present invention are not impaired, and can be of any desired size and shape, but it is preferable that the thickness of the interface 6 to be welded is 3 mm or more. In the linear friction welding method of the present invention, since the linear friction behavior at the initial stage of welding can be made uniform and stabilized, and unwelded defects can be suppressed and the welding temperature distribution can be made uniform, even when the thickness of the interface 6 to be welded is 3 mm or more, a good and homogenous weld portion can be obtained.

### (1-2) Second Step

The second step is a step of applying a preliminary pressure P₂ approximately perpendicular to the interface 6 to be welded, and is the most important step in the linear friction welding of the present invention.

The most notable feature of the second step is that the preliminary pressure P₂ is set to a value higher than the welding pressure P₃ in the third step. The non-uniformity and instability of the linear friction behavior are largely caused by the initial state of the welding, and this state is promoted with the passage of welding time. Regarding to this fact, by applying the preliminary pressure P₂ higher than the welding pressure P₃, the linear friction behavior at the initial stage of the welding can be made uniform and stabilized, thereby it is possible to realize the suppressing unwelded defects and the achieving a uniform welding temperature distribution.

Further, it is preferable to work-harden the interface 6 to be welded by applying the preliminary pressure P₂. The effects of the present invention can be obtained by applying the preliminary pressure P₂ higher than the welding pressure P₃, but by work-hardening the interface 6 to be welded, the linear friction behavior at the initial stage of welding can be more reliably uniformed and stabilized, thereby suppressing unwelded defects and achieving uniform welding temperature distribution. Here, the presence or absence of the work-hardening at the interface 6 to be welded can be easily determined by measuring the hardness of the interface 6 to be welded.

The upper limit value of the preliminary pressure P₂ is not particularly limited as long as the linear friction welded portion can be obtained, but it is preferable to set the upper limit value to such a value that does not cause significant plastic deformation of the entire protruding portions (areas protruding beyond the gripping portion of the linear friction welding device) of the one member 2 and the other member 4.

### (1-3) Third Step

The third step is a step in which one member 2 and the other member 4 are repeatedly slid on the same trajectory in a state in which a welding pressure P₃ is being applied approximately perpendicular to the interface 6 to be welded, and the burrs 8 are removed from the interface 6 to be welded approximately parallel to and approximately perpendicular to the sliding direction.

The method of repeatedly sliding the one member 2 and the other member 4 on the same trajectory is not particularly limited as long as the effects of the present invention are not impaired, and both members may be vibrated together, or one may be fixed and the other may be vibrated.

Here, the welding temperature can be controlled by setting the welding pressure P₃ during linear friction welding to be equal to or higher than the yield stress and equal to or lower than the tensile strength of the one member 2 and/or the other member 4 at the desired welding temperature. When the welding pressure P₃ is set to be equal to or higher than the yield stress of the member to be welded, the removal of the burrs 8 from the interface 6 to be welded is started, and when the welding pressure P₃ is increased up to the tensile strength, the removal of the burrs 8 is accelerated. Similar to the yield stress, since the tensile strength at a specific temperature is substantially constant depending on the member to be welded, the welding temperature corresponding to the set welding pressure P₃ can be realized. From the viewpoint of suppressing the increase in the welding temperature, it is preferable to set the welding pressure P₃ to be equal to or lower than the tensile strength.

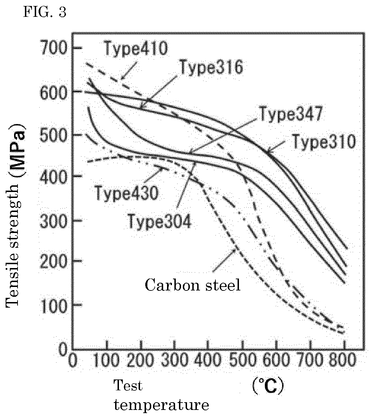

As a specific example, the tensile strength of carbon steel and various stainless steel materials at each temperature is shown in FIG. 3. Note that FIG. 3 is a graph published in "Sanyo Technical Report Vol. 21 (2014) No. 1." As shown in FIG. 3, the tensile strength at a particular temperature is approximately constant for different materials. That is, by storing such data for the materials to be welded in a database, welding at any temperature can be achieved efficiently and easily.

When the welding pressure P₃ during welding is set high, the welded members (steel materials) having a higher yield strength and tensile strength can be removed as the burrs, and the welding temperature can be reduced. Further, as shown in FIG. 3, since the tensile strength (and yield stress) at a specific temperature is approximately constant depending on the material, by setting the welding pressure P₃ based on the temperature dependency of the strength of the steel material, it is possible to control the welding temperature (maximum temperature reached) of the steel material extremely accurately.

In the third step, it is also necessary to set welding parameters other than the welding pressure P₃ (frequency and amplitude for vibrating the members to be welded, welding time, burn-off length, and the like), however, these values are not limited as long as the effects of the present invention are not impaired, and may be set appropriately depending on the material, shape, size, and the like of the members to be welded. Here, by increasing the amplitude and frequency at which the members to be welded are slid, the rate of temperature rise and the rate of cooling after welding increase, but the maximum temperature reached (welding temperature) would not change.

The maximum temperature reached at the welded portion can basically be determined by the welding pressure P₃, but if the welding temperature exceeds the desired value due to overshoot caused by too excessive rate of temperature rise, it is preferable to reduce the frequency and/or amplitude.

### (1-4) Fourth Step

The fourth step is a step in which the sliding in the third step is stopped and a welded surface is formed. In the linear friction welding method of the present invention, by stopping the sliding after the burrs 8 have been removed from the entire surface of the interface 6 to be welded, it is possible to obtain a good welded body. Note, the welding pressure P₃ applied to the members to be welded in the third process may be maintained as it is (P₃ = P₄), or it may be set to a higher value (P₃ < P₄) in order to remove the burrs 8 and to abut the new surface more strongly. In the welding process, when the welded area increases, there is a case that the pressure P decreases to increase the welding temperature unintentionally, however, by increasing the pressure P, this phenomenon can be suppressed.

Here, the timing for stopping the sliding is not limited as long as the burrs 8 have been removed from the entire surface of the interface 6 to be welded, but by observing the interface 6 to be welded from the direction approximately perpendicular to the sliding direction and stopping the sliding at the moment when the burrs 8 are removed approximately parallel to the sliding direction, a good welded portion can be formed while minimizing the amount of the removed burrs 8 (while minimizing the consumption of the material to be welded). Note, "the direction substantially perpendicular to the sliding direction" and "the direction substantially parallel to the sliding direction" are both directions substantially perpendicular to the applied pressure.

### (2) Linear friction welded joint

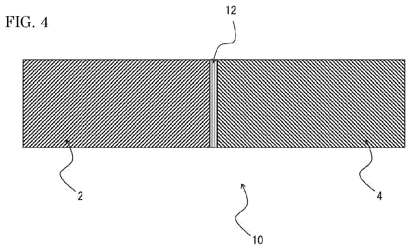

FIG. 4 is a schematic cross-sectional view showing one example of the linear friction welded joint of the present invention. The linear friction welded joint 10 is formed by linear friction welding the one member 2 and the other member 4, and at least one of the one member 2 and the other member 4 is made of steel material.

Further, the thickness of the steel material which forms the linear friction welded interface 12 is 3 mm or more, the entire linear friction welded interface 12 is metallurgically welded, and the martensite is not formed in the steel material in the entire linear friction welded interface 12. The entire linear friction welded interface 12, which has a thickness of 3 mm or more, is free of defects and martensite, and forms a welded portion having extremely high reliability and mechanical properties.

It is preferable that at least one of the one member 2 and the other member 4 is made of a weathering steel. Weathering steel contains a relatively large amount of P and the like, and since it is difficult to suppress weld cracks, the application of solid-state welding is highly desired. By using the linear friction welding method of the present invention, a good welded portion can be obtained. The type of the weathering steel is not particularly limited as long as the effects of the present invention are not impaired, and not only any weathering steels that have been well known in the art can be used, but a weathering steel that will be developed in the future can also be used.

Further, although the linear friction welded joint 10 shown in FIG. 4 is a butt joint, the joint shape is not limited to this, and various joint shapes known in the art, such as a cross joint or a lap joint, may be used. Further, the size and shape of the member to be welded are not particularly limited as long as the effects of the present invention are not impaired.

### (3) Welded structure

The welded structure of the present invention is a welded structure having the linear friction welded joint 10, and particularly when the weathering steel is used, since excellent corrosion resistance and mechanical properties can be obtained, it is possible to suitably use in applications requiring high reliability in corrosive environments.

The welded structure of the present invention is not particularly limited as long as the effects of the present invention are impaired, and various welded structures known in the art can be formed. Examples of the welded structures include automobile parts, railway vehicle parts, ship parts, aircraft parts, building structures, various infrastructure structures, machine structural parts, and chemical industry facility parts, and the like.

Although the typical embodiments of the present invention have been described above, the present invention is not limited to these, and various design changes are possible, and all of these design changes are included in the technical scope of the present invention.

### EXAMPLES

### <Example 1>

High weathering rolled steel SPA-H (JIS G 3125) was used as the member to be welded, and linear butt friction welding was performed between two high weathering rolled steel members. The high weathering rolled steel member had a thickness of 3.2 mm and a width of 30 mm, and end faces of 3.2 mm x 30 mm were abutted each other to form a interface to be welded (first step).

Next, after applying a preliminary pressure of 500 MPa approximately perpendicularly to the interface to be welded (Second step), linear sliding was performed under the conditions of a welding pressure of 250 MPa, a frequency of 15 Hz, and an amplitude of ±1.5 mm (Third step), and the welding process was terminated when a burn-off length reached 2.5 mm (Fourth step).

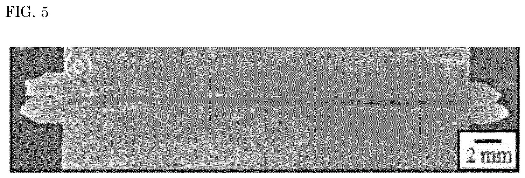

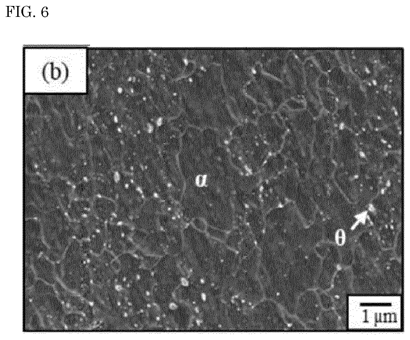

A cross-sectional macrophotograph of the obtained linear friction welded joint is shown in FIG. 5. It can be seen that metallurgical welding is achieved across the entire welded interface, and there is no defect or unwelded area. FIG. 6 shows the microstructure at the center portion of the welded interface (center portion in the vibration direction) in FIG. 5. The structure consisting of ferrite and fine cementite is formed, and any martensite formation is not observed. The results show that the maximum temperature reached during the linear friction welding was equal to or lower than the A₁ point of high weathering rolled steel. Note, the fine structure as shown in FIG. 6 was formed over the entire welded interface.

### <Example 2>

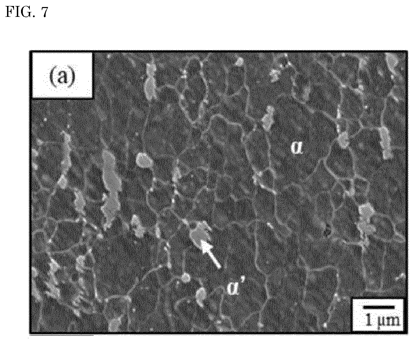

A linear friction welded joint was obtained in the same manner as in Example 1, except that the preliminary pressure was set to 200 MPa. According to the macroscopic observation of the cross section of the linear friction welded joint thus obtained, metallurgical welding was achieved over the entire welded interface, and no defect or unwelded area was observed. FIG. 7 shows the microstructure at the center portion of the welded interface (center portion in the vibration direction). This indicates that a structure consisting of ferrite and martensite was formed, and that the maximum temperature reached during the linear friction welding was equal to or higher than the A₁ point of high weathering rolled steel. The results show that the application of preliminary pressure can suppress welding defects and unwelded parts, and that the application of a relatively high preliminary pressure is necessary to uniformize the welding temperature. Further, when the surface temperature history in the vicinity of the welded interface during welding was measured by using a thermal imaging camera (CPA-T640) (emissivity: 0.78), the temperature was equal to or lower than the A₁ point, but, when preliminary pressure was not applied, there was the internal area with uneven temperature, and it is considered that the temperature exceeded the A₁ point in that area.

### <Comparative Example 1>

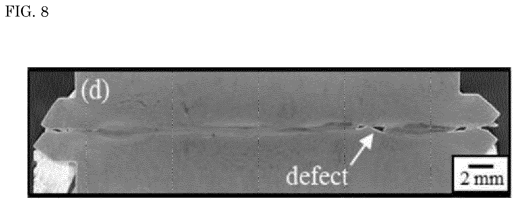

A linear friction welded joint was obtained in the same manner as in Example 1, except that no preliminary pressure was applied to the interface to be welded. A cross-sectional macrophotograph of the obtained linear friction welded joint is shown in FIG. 8. It can be seen that defects are formed at the welded interface and a good bond is not obtained. This is caused from the facts that the welding pressure of 250 MPa was excessive relative to the room temperature strength of the members to be welded, and that the material in the vicinity of the interface was largely plastically deformed in the initial stage of welding.

### <Comparative Example 2>

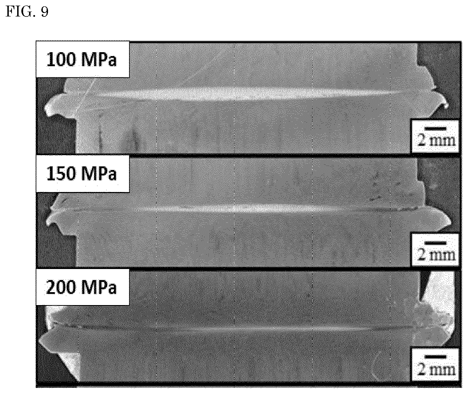

A linear friction welded joint was obtained in the same manner as in Example 1, except that no preliminary pressure was applied to the interface to be welded and the welding pressures were set to 100 MPa, 150 MPa, and 200 MPa. FIG. 9 shows a cross-sectional macrophotograph of each of the linear friction welded joints obtained. There was no defect or unwelded area at the welded interface, but formation of the martensite was observed in all regions.

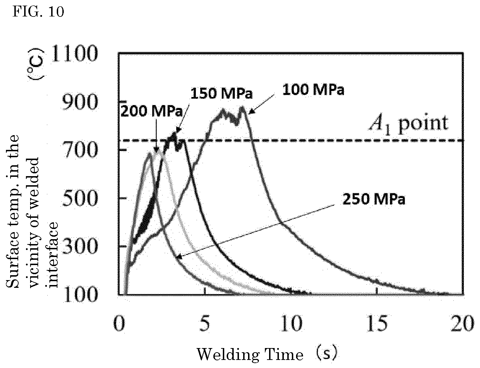

The surface temperature history in the vicinity of the welded interface during welding in Comparative Example 1 and Comparative Example 2 was measured by a thermal imaging camera (CPA-T640) (emissivity: 0.78). The measuring position was the center portion of the welded interface in the vibration direction. The measurement results are shown in FIG. 10. It can be seen that the maximum temperature decreases as the welding pressure increases. Here, when the welding pressure was 250 MPa, the maximum temperature reached was equal to or lower than the A₁ point of the high weathering rolled steel, but an area where martensite was formed exists in the actually obtained welded interface.

### BRIEF EXPRANATION OF SYMBOLS

- 2: One member,
- 4: Other member,
- 6: Interface to be welded,
- 8: Burrs,
- 10: Linear friction welded joint,
- 12: Linear friction welded interface.

## Claims

1. A linear friction welding method **characterized by** comprising:
a first step for abutting one member against the other member to form an interface to be welded;
a second step for applying a preliminary pressure substantially perpendicularly to the interface to be welded;
a third step for repeatedly sliding the one member and the other member on the same trajectory in a state in which a welding pressure is being applied to the interface to be welded, and removing burrs from the interface to be welded; and
a fourth step for stopping the sliding, and forming a welded surface,
wherein the preliminary pressure in the second step is set to a value higher than the welding pressure.

2. The linear friction welding method according to claim 1, wherein the interface to be welded is work-hardened in the second step.

3. The linear friction welding method according to claim 1 or 2, wherein the thickness of the interface to be welded is 3 mm or more.

4. The linear friction welding method according to claim 1 or 2, wherein the one member and/or the other member are made of steel material.

5. The linear friction welding method according to claim 1 or 2, wherein
a desired welding temperature is determined, and
the pressure is set to be equal to or higher than the yield stress and equal to or lower than the tensile strength of the one member and/or the other member at the desired welding temperature.

6. The linear friction welding method according to claim 4 or 5, wherein
the one member and/or the other member is made of a steel material, and
the welding temperature is set to be equal to or lower than an A₁ point of the steel material.

7. A linear friction welded joint, **characterized by** having a linear friction welded portion where one member and the other member are integrated via a linear friction welded interface, wherein
the one member and/or the other member is made of steel material,
the thickness of the steel material forming the linear friction welded interface is 3 mm or more,
the entire linear friction welded interface is metallurgically welded, and
no martensite is formed in the steel material throughout the linear friction welded interface.

8. The linear friction welded joint according to claim 7, wherein the steel material is a weathering steel.

9. A welded structure comprising the linear friction welded joint according to claim 7 or 8.
